Europäisches Patentamt

European Patent Office

Office européen des brevets

(11) Publication number: **0 453 281 A2**

# EUROPEAN PATENT APPLICATION

(21) Application number: 91303463.3

(22) Date of filing: 18.04.91

(51) Int. Cl.⁵: **H04N 1/41**

(30) Priority: 20.04.90 JP 102802/90
28.06.90 JP 168506/90

(43) Date of publication of application:
23.10.91 Bulletin 91/43

(84) Designated Contracting States:
DE FR GB

(71) Applicant: SONY CORPORATION
7-35 Kitashinagawa 6-Chome Shinagawa-ku
Tokyo 141 (JP)

(72) Inventor: Matsunaga, Osamu, c/o Patents
Division
Sony Corporation, 6-7-35 Kitashinagawa
Shinagawa-ku, Tokyo 141 (JP)

(74) Representative: Cotter, Ivan John et al
D. YOUNG & CO. 10 Staple Inn
London WC1V 7RD (GB)

(54) Still image transmission.

(57) In a still image transmission method in which a video image is converted into digital data, the data are sub-sampled for a picture area in the case of a still image, and the sub-sampled data are transmitted over N fields, those data skipped in the sub-sampling operation also are transmitted. The skipped data are transmitted during N fields contiguous to the N fields in which the sub-sampled data are transmitted, so that the still image is transmitted during 2 N fields.

# FIG. 3(a)    FIG. 3(b)    FIG. 3(c)

This invention relates to still image transmission.

The so-called MUSE (Multiple Sub-Nyquist Sampling Encoding) system has been developed as a transmitting method for high-definition television (HDTV) broadcasting by satellite. The MUSE system enables a video image signal to be transmitted using a narrow band (8.1 MHz), without degradation of the visually sensed resolution of the signal, by means of digital processing and bandwidth compression.

In the MUSE system, different signal processing is applied to moving picture and still picture portions of the video image signal to be transmitted and the signal is transmitted at the rate of one out of four sampling points (samples).

A picture area of the video image is formed from one field in a moving picture portion, whereas a picture area of the video image is formed from four fields in a still picture portion.

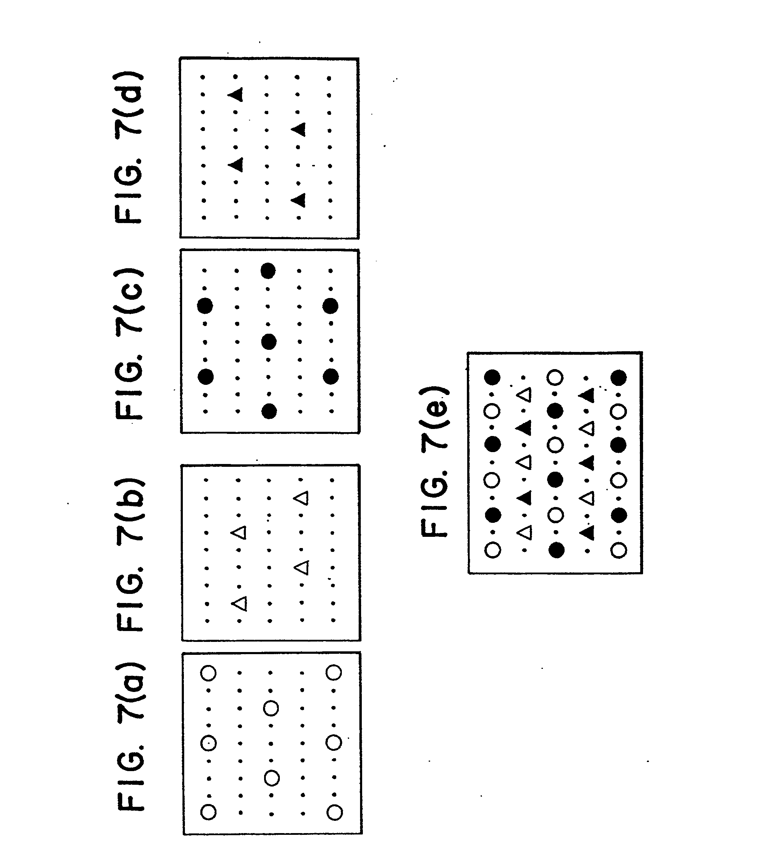

More specifically, in the case of still video image transmission, odd field image data shown at O in Figure 7(a) of the accompanying drawings, which is image data sub-sampled at the rate of one out of four sampling points, is first transmitted. Then, data in an even field as shown at Δ in Figure 7(b) is transmitted as second-field data.

Further, odd field image data as shown at ● in Figure 7(c) is transmitted as third-field data, and then even field image data as shown at ▲ in Figure 7(d) is transmitted as fourth-field data.

A receiver, upon receipt of the four fields of image data, synthesises or generates a first-field signal by generating an interpolated signal from the image data O and ● and simultaneously synthesises or generates a second field signal by generating an interpolated signal from the image data Δ and ▲.

By means of such signal processing carried out at the receiver, a monitor for the received video image signal is enabled to display a monitor screen in which the four fields of image data are arranged as shown in Figure 7(e).

In Figure 7(e), the points · correspond to the image data generated by interpolation between fields. In the case of a still video image, there is no possibility of an after-image being caused by the interpolation between fields.

However, the interpolated data · are contiguous in the diagonal direction. Therefore, the resolution in the diagonal direction is lowered by approximately one half, which gives rise to the problem that a worsening of resolution becomes noticeable in a still video image.

According to the invention there is provided a still image transmitting method comprising:

converting a video image into digital image data;

sub-sampling the digital image data for a picture area, thereby selecting pixel data of the digital image data representing a still image at intervals having a predetermined period; and

transmitting the sub-sampled digital image data representing the still image of the picture area as N fields of video information;

wherein digital image data which is skipped in the sub-sampling step is transmitted in N fields contiguous to the first-mentioned N fields so that the still image of the picture area is transmitted in a period comprising 2N fields.

A preferred embodiment of the invention described below at least partially solves the problem described above. Thus, in the still image transmitting method constituting the preferred embodiment, the number of fields of the transmitted image is increased to be twice that in the still image mode of the above-described prior proposal so that the resolution in the diagonal direction is improved, without increasing the transmission bandwidth.

The preferred embodiment provides a still image transmitting method, which is particularly (but not exclusively) usable in an image transmitting system using a bandwidth compression method (MUSE) for transmitting a wideband video image signal used in practice, for example, in high definition television system (HDTV), in which some image data, which were not transmitted in the previously proposed still image transmitting method, are transmitted, whereby the reduction in resolution occurring in the case of the previously proposed still image transmission technique, especially in the diagonal direction, is prevented from occurring.

The method of the preferred embodiment is for example suitable for use in transmitting and receiving a video image signal of wide bandwidth via a transmission line or other transmission channel of narrow bandwidth employing a bandwidth compression technique.

The invention will now be further described, by way of illustrative and non-limiting example, with reference to the accompanying drawings, in which:

Figure 1 is a block diagram of a receiving circuit or system that can be used in the case of a still image transmitting method according to an embodiment of the invention;

Figures 2 to 5 are diagrams showing interpolation processing of image data as carried out in the system of Figure 1;

Figure 6 is a processed data diagram for explaining the timing of operation of switches of the system of Figure 1; and

Figure 7 is a diagram showing a previously proposed method of processing still video image data.

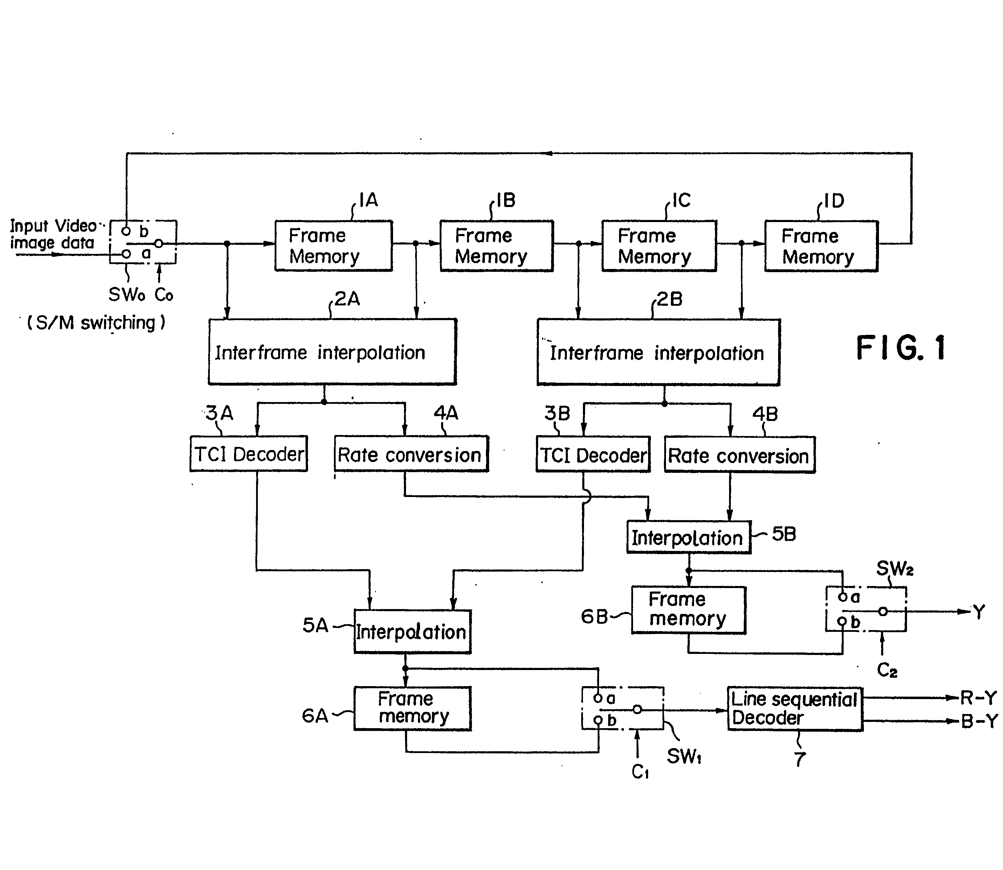

Figure 1 is a block diagram showing in outline a video image signal receiving circuit or system employed in a still image transmitting method embodying the invention.

The system shown in Figure 1 includes a

still/moving (S/M) mode switch SWo controlled upon receipt of a still video image transmitting mode signal Co to connect a movable contact thereof to a terminal a so as to accept eight fields of input video image data, and then to connect the movable contact to a terminal b.

The system shown in Figure 1 also comprises frame delay blocks 1A to 1D formed of frame memories or the like, interframe interpolation blocks 2A and 2B for interframe-interpolating image data successively outputted from the frame delay blocks 1A to 1D, TCI decoders 3A and 3B for expanding the time base of a chroma signal (C signal) transmitted in accordance with the MUSE system, rate conversion blocks 4A and 4B for converting the sampling frequency of a luminance signal (Y signal) transmitted in accordance with the MUSE system, a C signal interpolation block 5A for interframe-interpolating C signals obtained from the TCI decoders 3A and 3B, and a Y signal interpolation block 5B for interframe-interpolating Y signals obtained from the rate conversion blocks 4A and 4B.

Further, the system shown in Figure 1 comprises delay memories 6A and 6B each providing a one-frame delay period. Inputs and outputs of the delay memories 6A and 6B are connected as shown to terminals a and b of changeover switches SW1 and SW2, respectively. The switches SW1 and SW2 are changed over (switched over) in a specified sequence described below by control data C1 and C2, which are supplied thereto in a still video image transmitting mode.

The system of Figure 1 also includes a line sequential decoder 7 as employed in the HDTV system for sequentially arranging the C signals.

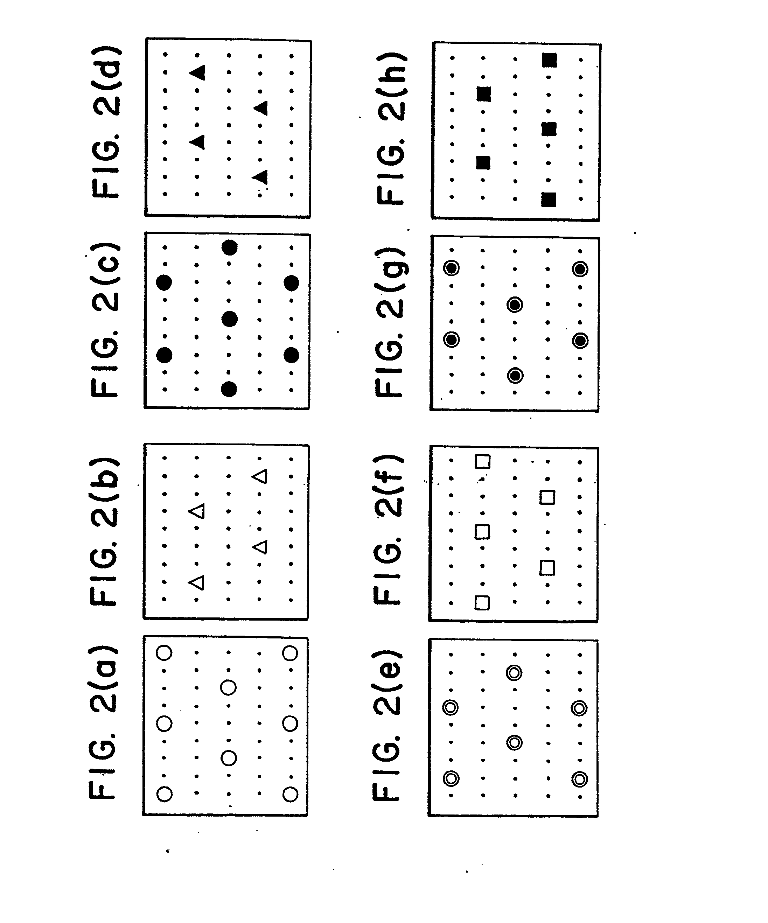

Figure 2 is a diagram showing eight respective fields of image data transmitted in the still image transmitting method embodying the invention. Of these fields of image data, the first, third, fifth, and seventh fields are shown in Figures 2(a), 2(c), 2(e) and 2(g), respectively, and indicate image data obtained by sampling a first (odd) field of the HDTV signal, the symbols $\bigcirc$, $\bullet$, $\textcircled{\bigcirc}$ and $\textcircled{\bullet}$ indicating pixel data at sampling points in different positions.

The second, fourth, sixth, and eighth fields are shown in Figures 2(b), 2(d), 2(f) and 2(h), respectively, and indicate image data obtained by sampling an even field of the same signal, the symbols $\triangle$, $\blacktriangle$, $\square$ and $\blacksquare$ indicating pixel data at sampling points in different positions.

In the still image transmitting method embodying the invention, when the mode is changed to the still video image transmitting mode, the above-described first to eighth fields of image data are sequentially transmitted from the transmitter side and are sequentially accepted at the receiver side, by operation of the switch SWo so that its movable contact is connected to the terminal b, by the frame delay blocks 1A to 1D

of Figure 1, which shows the still video image processing blocks provided on the receiver side.

The movable contact of the switch SWo is connected to the terminal b after the eight fields of image data have been stored in the frame delay blocks 1A to 1D. Then, at a point in time corresponding to a first (odd) field, the image data of the first and the third fields are supplied to the interframe interpolation block 2A and the image data of the fifth and the seventh fields are supplied to the interframe interpolation block 2B.

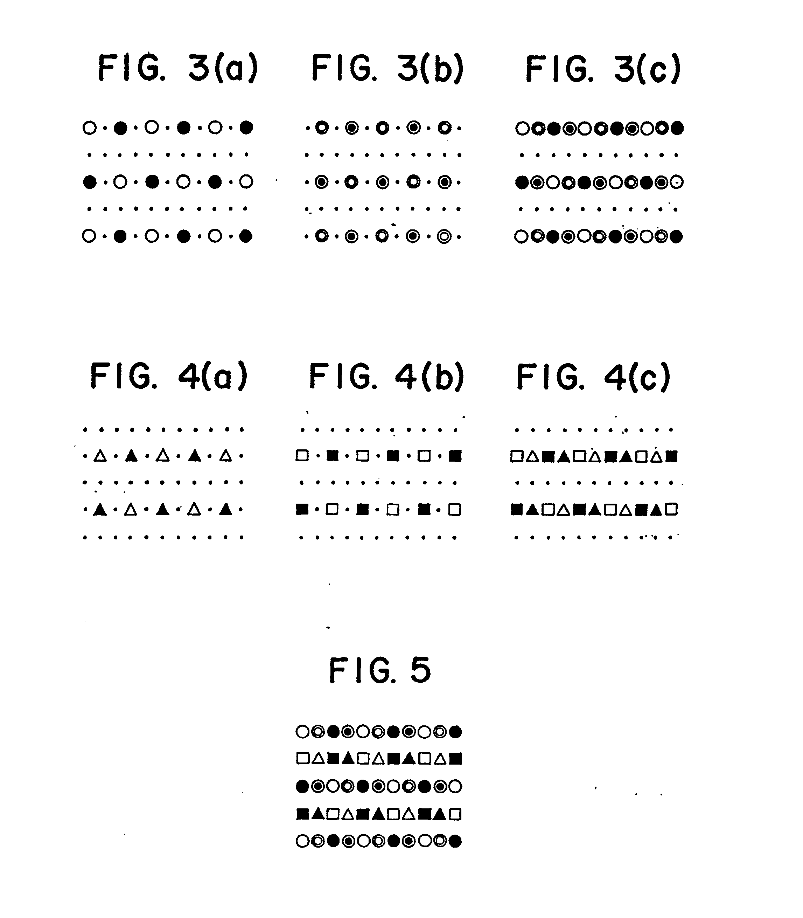

In the interframe interpolation block 2A, the image data ( $\bigcirc$, $\bullet$ ) of the first and third fields are subjected to interframe interpolation and an interframe-interpolated signal as shown in Figure 3(a) is generated.

Similarly, in the interframe interpolation block 2B, the image data ($\textcircled{\bigcirc}$, $\textcircled{\bullet}$ ) of the fifth and seventh fields are subjected to interframe interpolation and an interframe-interpolated signal as shown in Figure 3(b) is generated.

Of these interframe-interpolated signals, those parts constituting the C signals are supplied to the TCI decoders 3A and 3B and those parts constituting the Y signals are supplied to the rate conversion blocks 4A and 4B.

The Y signals (data) supplied to the rate conversion blocks 4A and 4B are then subjected to interframe interpolation in the Y signal interpolation block 5B and, as a result, the video image data in the received odd-field signals are synthesised into video image data arranged as shown in Figure 3(c).

The video image data in this arrangement is outputted through the terminal a of the switch SW2 as picture image data for the odd field.

In the next (second) field, the frame delay blocks 1A to 1D supply the data of the second and fourth fields and the sixth and eighth fields ( $\triangle$, $\blacktriangle$; $\square$, $\blacksquare$) to the interframe interpolation blocks 2A and 2B, respectively.

At this timing of the even frame, in the same manner as in the signal processing of the odd frame, video image data as shown in Figure 4(a) and Figure 4(b) are outputted from the interframe interpolation blocks 2A and 2B, respectively, and these video image signals are subjected to interframe interpolation in the Y signal interpolation block 5B so that video image data having an arrangement as shown in Figure 4(c) is generated.

The video image data as shown in Figure 4(c) is outputted through the terminal a of the switch SW2 as picture image data for the even field

Accordingly, with the image data as shown in Figures 3(c) and 4(c) subjected to interlaced scanning, the monitor screen provides a display as shown in Figure 5. Since, in this displayed picture area, the pixels are all formed of video image data transmitted from the transmitter side, a still video image with high resolution can be obtained.

As regards the C signals, since similar signal processing is performed on the C signals outputted from the frame delay blocks 1A to 1D, a chroma signal whose resolution in the diagonal direction is improved over the previously proposed one described in the introduction to this description is outputted from the line sequential decoder 7.

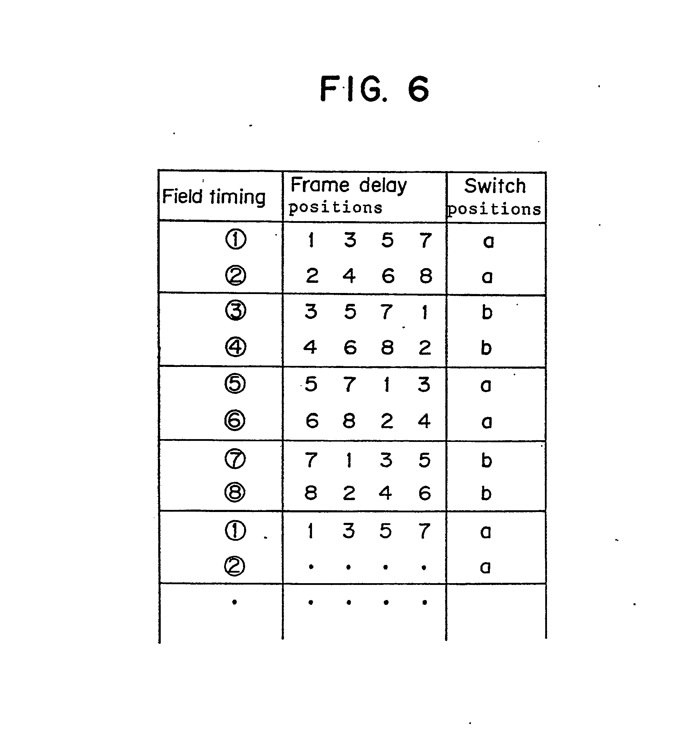

Figure 6 shows series of image data outputted from the frame delay blocks at one field intervals and corresponding timing of the operation of the switches SW1 and SW2. That is, the first column indicates the field timing or sequence, the second column indicates those ones of the eight fields of image data of the input signal employed for interframe interpolation during each field timing, and the third column indicates the positions of the switches SW1 and SW2 (the terminals to which the movable contacts are connected) during each field timing. It will be seen that the first two rows in Figure 6 summarise the operation of the system of Figure 1 during the first two fields (as just described), that is at the field timings① and②.

At the timing③ of the next field, as shown in the third row of Figure 6, the video image data of the third field and the fifth field become the interframe-interpolated data outputted from the interframe interpolation block 2A, while the video image data of the seventh field and the first field become the interframe-interpolated data outputted from the interframe interpolation block 2B.

Thus, at the timing of this field, the position of the interpolated data becomes different and, hence, the arrangement of the still video image data becomes different from that in the preceding frame. (This holds true also for the timing④ of the next field, at which the data of the even field come in.)

Therefore, in this embodiment of the invention, the switches SW1 and SW2 are controlled such that their movable contacts are connected to their terminals b, for example, during the interpolating periods at the timings③ and④, so that the interpolated video image data at the timing one frame before may be outputted.

Figure 6 shows in full the series of image data outputted from the frame delay blocks 1A to 1D at intervals of one field and the corresponding timing of operation of the switches SW1 and SW2. It will be seen that the movable contacts of the switches SW1 and SW2 are switched between the terminals a and b at one-frame intervals.

Although, in the case described above, eight fields of still video image data are read into the frame delay blocks 1A to 1D and, when the still video image transmitting mode is selected, corresponding signal processing is performed dynamically by shifting the contents of the blocks 1A to 1D for successive fields, it is instead possible to arrange, using a large-capacity field memory, for the image data stored in the frame delay blocks 1A to 1D to be read into the large- capacity field memory at corresponding pixel positions thereof, after which signal processing is performed to read out the still video image data for one picture area (Figure 5) repeatedly to thereby achieve the display of the still video image.

In the case of applying the present invention to a transmitting system using the MUSE system, the transmitter side will also transmit a code signal to indicate whether the transmitted signal is that of the first to fourth fields or that of the fifth to eighth fields, so that the above-described signal processing system used in the still video image transmitting mode may be set up on the receiver side.

In the still image transmitting method embodying the invention as described above: twice as many fields as in the case of the previously proposed method described in the introduction hereto are transmitted; the fields containing information representing a still video image are transmitted in such a manner that the information which was skipped (not selected) in the sub-sampling operation in the case of transmission of a still video image using a signal bandwidth compression technique with the previous proposal is also transmitted; and, on the receiver side, interframe interpolation is performed so that still video image data not subjected to sub-sampling is outputted in the form of fields of data. Therefore, the advantage is obtained that a high definition video image transmission of improved resolution, especially in the diagonal direction, can be achieved.

## Claims

1. A still image transmitting method comprising:
   converting a video image into digital image data;
   sub-sampling the digital image data for a picture area, thereby selecting pixel data of the digital image data representing a still image at intervals having a predetermined period; and
   transmitting the sub-sampled digital image data representing the still image of the picture area as N fields of video information;
   wherein digital image data which is skipped in the sub-sampling step is transmitted in N fields contiguous to the first-mentioned N fields so that the still image of the picture area is transmitted in a period comprising 2N fields.

2. A method according to claim 1, wherein a control signal indicating whether the transmitted video data is that of the first-mentioned N fields or that of said contiguous N fields is added to the transmitted video data.

FIG. 1

FIG. 2(a)   FIG. 2(b)   FIG. 2(c)   FIG. 2(d)

FIG. 2(e)   FIG. 2(f)   FIG. 2(g)   FIG. 2(h)

EP 0 453 281 A2

# FIG. 3(a)     FIG. 3(b)     FIG. 3(c)

# FIG. 4(a)     FIG. 4(b)     FIG. 4(c)

# FIG. 5

# F·IG. 6

| Field timing | Frame delay positions | | | | Switch positions |
|---|---|---|---|---|---|
| ① | 1 | 3 | 5 | 7 | a |
| ② | 2 | 4 | 6 | 8 | a |
| ③ | 3 | 5 | 7 | 1 | b |
| ④ | 4 | 6 | 8 | 2 | b |
| ⑤ | 5 | 7 | 1 | 3 | a |
| ⑥ | 6 | 8 | 2 | 4 | a |
| ⑦ | 7 | 1 | 3 | 5 | b |
| ⑧ | 8 | 2 | 4 | 6 | b |
| ① | 1 | 3 | 5 | 7 | a |
| ② | · | · | · | · | a |
| · | · | · | · | · | |

FIG. 7(a)  FIG. 7(b)    FIG. 7(c)    FIG. 7(d)

FIG. 7(e)

EP 0 453 281 A2